# EUROPÄISCHE PATENTANMELDUNG

(11) **EP 2 243 620 A2**
(43) Veröffentlichungstag der Anmeldung: **27.10.2010**
(21) Anmeldenummer: 10160123.5
(22) Anmeldetag: 16.04.2010
(51) Int. Cl.: B29C 65/44, B29C 65/14, B60G 21/055, B29L 31/30, B29K 705/00, B29K 21/00, B29K 105/24

(54) **Verfahren und Vorrichtung zur Herstellung eines Verbundbauteils aus einem Metallbauteil und einem Polymerformteil**

(30) Priorität: 20.04.2009 DE 102009003803
(71) Anmelder: Benteler Automobiltechnik GmbH, 33102 Paderborn (DE)
(72) Erfinder: Andres, Thorsten, 33106 Paderborn (DE); Hammelmaier, Ullrich, 33100, Paderborn (DE); Seibt, Oliver, 33102, Paderborn (DE)
(74) Vertreter: Dantz, Jan Henning

(57) **Zusammenfassung**

Ein Verfahren zur Herstellung eines Verbundbauteils (1) aus einem Metallbauteil (2) und einem Polymerformteil (3), insbesondere in Form eines Stabilisatorlagers oder Drehstabschulterlagers, weist die folgenden Verfahrensschritte auf:
- Vorbehandlung des Metallteils (2) mit einem Haftvermittler,
- Zumindest teilweises Zusammenbringen des Metallteils (2) mit dem Polymerformteil (3),
- Erhitzen des Verbundbauteils (1) über eine vorbestimmte Zeit auf eine vorbestimmte Temperatur,
wobei die Erhitzung des Verbundbauteils (1) im Bereich der zusammengebrachten Teile durch Infrarotbestrahlung erfolgt. Desweiteren wird eine Vorrichtung zur Durchführung eines Verfahrens zur Herstellung eines Verbundbauteils (1) beschrieben.

## Beschreibung

Die vorliegende Erfindung betrifft ein Verfahren zur Herstellung eines Verbundbauteils aus einem Metallbauteil und einem Polymerfonnteil, insbesondere in Form eines Stabilisatorlagers oder Drehstabschulterlagers, gemäß dem Oberbegriff des Anspruchs 1, sowie eine Vorrichtung zur Durchführung des Verfahrens gemäß dem Oberbegriff des Anspruchs 4.

Aus dem Stand der Technik sind Verfahren zur Herstellung von Verbundsystemen aus Metall und Polymerformteilen bekannt, bei denen als Gummilager ausgebildete Polymerformteile als geschlitzte oder geteilte Ausführung auf einen Stabilisator aufgeschoben und anschließend mit einer Schelle unter Spannung gebracht und an einem Fahrzeug montiert werden.

Bei einem weiteren bekannten Verfahren werden die Gummilager und das als Stabilisator ausgebildete Metallteil durch Vulkanisation der Gummilager auf dem Stabilisator zusammengebracht. Hierbei wird der Stabilisator zunächst mit einem Haftvermittler behandelt und anschließend ein vorvulkanisiertes Gummilager auf den Stabilisator aufgeschoben. Im Anschluss daran wird dieser Verbund in einem Ofen über eine vorher definierte Zeit auf eine bestimmte Temperatur erhitzt. Durch die Wärmeeinwirkung vernetzt sich der Gummi mit dem Haftvermittler und damit mit dem Stabilisator, so dass diese stoffschlüssig miteinander verbunden sind.

Nachteilig an diesem Verfahren ist, dass das oben beschriebene Vulkanisationsverfahren sehr kostenintensiv ist, da zum Einen ein dafür geeigneter Ofen angeschafft werden muss und zum Zweiten die Durchlaufzeit des Bauteils zur Vulkanisation etwa 40 Minuten beträgt. Außerdem muss sehr viel Energie eingesetzt werden, da der gesamte Stabilisator erwärmt werden muss.

Als Alternative zu der Wärmebehandlung in einem Ofen ist es auch bekannt, den Stabilisator induktiv zu erwärmen und so die Verbindung zwischen Gummilager und Stabilisator herbeizuführen.

Bei dieser Variante sind im Vergleich zur oben genannten Variante die Investitionskosten und Prozesskosten geringer. Nachteilig ist hier, dass eine prozesssicherere Temperaturregelung bei einer induktiven Beheizung sehr aufwändig ist. Außerdem sind die Energiekosten nach wie vor sehr hoch, da der Wirkungsgrad des Gesamtsystems sehr niedrig ist. Überdies muss zum Einsatz von Induktoren auch eine Kühlung für die Induktoren vorgesehen werden.

Aufgabe der vorliegenden Erfindung ist es daher, ein Verfahren zur Herstellung eines Verbundbauteils aus einem Metallbauteil und einem Polymerformteil bereit zu stellen, mit dem die oben genannten Nachteile beseitigt werden. Insbesondere soll ein serientaugliches Verfahren für die Aufvulkanisation von Polymerformteilen auf Metallbauteile bei deutlich geringerer Prozessenergie bereitgestellt werden.

Diese Aufgabe wird durch ein Verfahren zur Herstellung eines Verbundbauteils aus einem Metallbauteil und einem Polymerformteil mit den Merkmalen des Anspruchs 1 sowie durch eine Vorrichtung zur Durchführung eines solchen Verfahrens mit den Merkmalen des Anspruchs 4 gelöst.

Erfindungsgemäß erfolgt die Wärmebehandlung durch den Einsatz von Infrarotstrahlung. Solche Infrarotlampen können sehr gut gesteuert bzw. geregelt werden, da die Strahlungsintensität direkt einstellbar ist. Damit ist es möglich, eine definierte Temperatur über mehrere Minuten hinweg konstant zu halten, was für den Vulkanisationsprozess unerlässliche Bedingung ist. Außerdem ist eine Erwärmung mittels Infrarotstrahlung deutlich energieeffizienter, da die eingesetzte Energie direkt in kurzwellige Strahlung umgewandelt wird und damit ein Wirkungsgrad von bis zu 85% erreichbar ist. Außerdem sind beim Einsatz von Infrarotlampen keine Peripheriegeräte, wie beispielsweise Geräte zur Wasserkühlung notwendig.

Vorteilhafte Weiterbildungen der Erfindung sind Gegenstand der Unteransprüche.

Durch den Einsatz ringförmiger bzw. in Gestalt zweier halbkugelförmig ausgebildeter Infrarotstrahler, die nur dort um das Metallbauteil herum angeordnet sind, wo das Polymerformteil mit dem Metallbauteil zusammengebracht ist, ist eine effektive Erhitzung des Metallbauteils nur an der notwendig zu erhitzenden Stelle des Metallbauteils gewährleistet.

Nachfolgend wird die Erfindung anhand eines Ausführungsbeispiels unter Bezugnahme auf die Zeichnungen näher beschrieben. Es zeigen:
- Fig. 1: eine schematische Ansicht eines Ausführungsbeispiels einer Vorrich- tung zur Herstellung eines Verbundsystems,
- Fig. 2: eine Schnittansicht durch den mit "A" bezeichneten Schnitt der Figur 1,
- Fig. 3: eine schematische Ansicht eines weiteren Ausführungsbeispiels einer Vorrichtung zur Herstellung eines Verbundsystems,
- Fig. 4: eine Schnittansicht durch den mit "A" bezeichneten Schnitt der Figur 3.

Bei einem Verfahren zur Herstellung eines Verbundbauteils 1, wie beispielsweise eines Stabilisatorlagers oder eines Drehstabschulterlagers, das aus einem beispielsweise als Stabilisator ausgebildeten Metallteil 2 und einem als Gummiformteil ausgebildeten Polymerformteil 3 besteht, wird in einem ersten Schritt das Metallteil 2 mit einem Haftvermittler vorbehandelt, um eine hinreichende Haftung zwischen dem Metallteil 2 und dem Gummiformteil 3 zu erreichen. Bei dem Haftvermittler kann es sich sowohl um einen Einkomponenten-Haftvermittler als auch um einen Mehrkomponenten-Haftvermittler handeln.

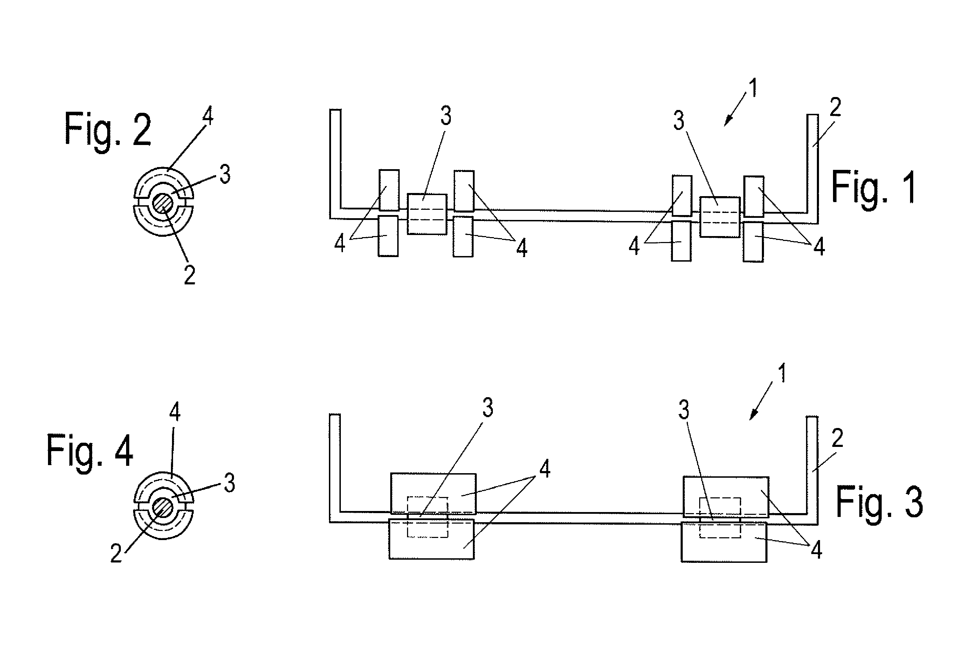

In einem zweiten Schritt werden zumindest Teilflächen des Metallteils und des Gummiformteils 3 zusammengebracht. Wie insbesondere in den Figuren 2 und 4 zu erkennen ist, wird das als Gummilager ausgebildete vorvulkanisierte Gummiformteil 3 auf das als Stabilisator ausgebildete Metallteil 2 auf eine vorbestimmte Position auf dem Metallbauteil 2 aufgeschoben, so dass es das Metallteil 2 als ringförmiges Gummiformteil 3 umgibt.

Im Anschluss daran wird das so zusammengesetzte Verbundbauteil 1 über eine vorher definierte Zeitspanne auf eine vorbestimmte Temperatur erhitzt. Durch die Wärmeeinwirkung verbindet sich das vorvulkanisierte Gummiformteil 3 mit dem Haftvermittler und damit mit dem Metallbauteil 2, so dass das Gummiformteil 3 fest mit dem Metallbauteil 2 verbunden ist.

Die Erhitzung des Verbundsystems 1 erfolgt, wie in den Figuren 1 bis 4 schematisch dargestellt ist, durch Infrarotbestrahlung des Metallbauteils 2 im Bereich des Gummiformteils 3. Dazu werden Infrarotlampen 4 beispielsweise links und rechts des als Gummilager ausgebildeten Gummiformteils 3 ringförmig um das als Stabilisator ausgebildete Metallbauteil 2 angeordnet. In einer alternativen Anordnung werden die Infrarotlampen rund um die Position des Gummilagers angeordnet. Beide Anordnungsvarianten bewirken eine Wärmebeaufschlagung des Metallbauteils 2 nur an dem Teil des Metallbauteils 2, an dem das Gummiformteil 3 an dem Metallbauteil 2 anliegt und mit diesem fest verbunden werden soll. Dadurch ist bei dem erfindungsgemäßen Verfahren ein erheblich niedrigerer Energieeintrag notwendig als bei der Erwärmung der Bauteile in einem Ofen oder durch induktive Erwärmung des Metallbauteils 2.

Durch die Anordnung der Infrarotlampen ist eine sehr exakte Steuerung der Temperatur gegeben, da die Strahlungsintensität der Infrarotlampen direkt einstellbar ist.

### Bezugszeichen

- Verbundbauteil: 1
- Metallteil: 2
- Polymerformteil: 3
- Infrarotlampen: 4

## Patentansprüche

1. Verfahren zur Herstellung eines Verbundbauteils (1) aus einem Metallbauteil (2) und einem Polymerformteil (3), insbesondere in Form eines Stabilisatorlagers oder Drehstabschulterlagers, mit den folgenden Verfahrensschritten:
- Vorbehandlung des Metallteils (2) mit einem Haftvermittler,
- Zumindest teilweises Zusammenbringen des Metallteils (2) mit dem Polymerfonnteil (3),
- Erhitzen des Verbundbauteils (1) über eine vorbestimmte Zeit auf eine
vorbestimmte Temperatur,
**dadurch gekennzeichnet, dass**
die Erhitzung des Verbundbauteils (1) im Bereich der zusammengebrachten Teile durch Infrarotbestrahlung erfolgt.

2. Verfahren nach Anspruch 1, **dadurch gekennzeichnet, dass** das Polymerformteil (3) als vorvulkanisiertes Gummiteil ausgebildet ist.

3. Verfahren nach Anspruch 1 oder 2, **dadurch gekennzeichnet, dass** das Polymerformteil (3) auf das Metallteil (2) aufgebracht wird.

4. Vorrichtung zur Durchführung des Verfahrens zur Herstellung eines Verbundbauteils (1) gemäß einem der vorstehenden Ansprüche, **dadurch gekennzeichnet, dass** die Vorrichtung zur Erwärmung des Metallteils Infrarotstrahler aufweist, welche im Bereich des mit dem Metallteil (2) zusammengebrachten Polymerformteil (3) angeordnet sind.

5. Vorrichtung nach Anspruch 4, **dadurch gekennzeichnet, dass** die Infrarotstrahler als ringförmig um das Metallteil im Bereich des daran angeordneten Gummilagers angeordnete Infrarotlampen ausgebildet sind.

6. Vorrichtung nach Anspruch 4, **dadurch gekennzeichnet, dass** die Infrarotstrahler in Gestalt von zwei halbkugelförmig um das Metallteil im Bereich des daran angeordneten Gummilagers angeordneten Infrarotlampen ausgebildet sind.
